# FASCICULE DE BREVET EUROPEEN

(11) **EP 1 339 887 B1**
(45) Date de publication et mention de la délivrance du brevet: **12.05.2004**
(21) Numéro de dépôt: 01996633.2
(22) Date de dépôt: 14.11.2001
(51) Int. Cl.: C22C 21/00, C22F 1/04, B32B 15/01

(54) **PROCEDE DE FABRICATION D'UNE BANDE PLAQUEE EN ALLIAGE D'ALUMINIUM POUR LA FABRICATION D'ECHANGEURS DE CHALEUR BRASES**
VERFAHREN ZUR HERSTELLUNG EINES MIT ALUMINIUMLEGIERUNG PLATTIERTEN STREIFENS ZUR HERSTELLUNG VON HARTGELÖTETEN WÄRMEAUSTAUSCHERN
METHOD FOR PRODUCING AN ALUMINIUM ALLOY PLATED STRIP FOR MAKING BRAZED HEAT EXCHANGERS

(30) Priorité: 16.11.2000 FR 0014791
(43) Date de publication de la demande: 03.09.2003
(73) Titulaire: Pechiney Rhenalu, 75116 Paris (FR)
(72) Inventeur: KUCZA, Jean-Claude, F-38960 Saint-Etienne-de-Crossey (FR); HENRY, Sylvain, F-38500 Voiron (FR); MEDIOUNI, Michel, F-38430 Moirans (FR); EBERSOLT, David, F-68000 Colmar (FR); REMOND, Nathalie, F-68000 Colmar (FR)
(74) Mandataire: Mougeot, Jean-Claude
(86) Numéro de dépôt international: PCT/FR2001/003566
(87) Numéro de publication internationale: WO 2002/040729

(56) Documents cités:
- EP-A- 1 075 935
- US-A- 6 019 939
- PATENT ABSTRACTS OF JAPAN vol. 016, no. 110 (C-0920), 18 mars 1992 (1992-03-18) -& JP 03 281761 A (SUMITOMO LIGHT METAL IND LTD), 12 décembre 1991 (1991-12-12)
- PATENT ABSTRACTS OF JAPAN vol. 015, no. 132 (C-0819), 29 mars 1991 (1991-03-29) -& JP 03 013550 A (SUMITOMO LIGHT METAL IND LTD), 22 janvier 1991 (1991-01-22)
- PATENT ABSTRACTS OF JAPAN vol. 1997, no. 06, 30 juin 1997 (1997-06-30) -& JP 09 031613 A (SKY ALUM CO LTD), 4 février 1997 (1997-02-04)
- PATENT ABSTRACTS OF JAPAN vol. 1997, no. 02, 28 février 1997 (1997-02-28) -& JP 08 283922 A (SKY ALUM CO LTD), 29 octobre 1996 (1996-10-29)
- H.S.YANG ETAL: "VTMS CONF. PROC - MECHANISMS OF FLUID FILM MIGRATION (LMF) IN ALUMINUM BRAZING SHEET, PAGES 649-658" 1977 , SAE INTERNATIONAL , US XP001020740 cité dans la demande

## Description

### Domaine de l'invention

L'invention concerne la fabrication de bandes minces (d'épaisseur généralement comprise entre 0,1 et 1,5 mm) en alliage aluminium-manganèse (série 3000 selon la nomenclature de l'Aluminum Association), plaquées sur une ou deux faces d'un alliage de brasage aluminium-silicium (série 4000 selon la nomenclature de l'Aluminum Association). Ces bandes sont destinées à la fabrication d'éléments emboutis d'échangeurs de chaleur assemblés par brasage fort, ces échangeurs entrant notamment dans les systèmes de refroidissement des moteurs et de climatisation des habitacles d'automobiles, et plus particulièrement de plaques d'évaporateurs de climatiseurs. Les techniques de brasage des alliages d'aluminium sont décrites par exemple dans l'article de J.C. Kucza, A. Uhry et J.C. Goussain " Le brasage fort de l'aluminium et ses alliages ", paru dans Soudage et Techniques Connexes, nov.-déc. 1991, pp. 18-29. Les bandes selon l'invention sont utilisées notamment dans les techniques de brasage avec flux non corrosif du type NOCOLOK ® ou CAB (controlled atmosphere brazing), mais peuvent l'être également dans d'autres techniques de brasage comme le brasage sous vide.

### Etat de la technique

L'utilisation des alliages d'aluminium dans les échangeurs thermiques des véhicules automobiles s'est développée au cours des dernières années, notamment en raison du gain de poids qu'elle procure par rapport à celle des alliages cuivreux. Les propriétés requises pour les bandes en alliage d'aluminium utilisées pour la fabrication d'échangeurs brasés sont notamment une bonne aptitude au brasage, une résistance mécanique élevée après brasage, de manière à utiliser des épaisseurs aussi faibles que possible, une formabilité suffisante pour une mise en forme aisée des éléments, en particulier les plaques d'évaporateurs comportant des nervures embouties, et enfin une bonne résistance à la corrosion. Cette résistance est généralement caractérisée par le test SWAAT (salt water acetic acid test) selon la norme ASTM G85. Bien entendu, il importe que le coût d'élaboration des bandes soit compatible avec les exigences de l'industrie automobile.

L'alliage couramment utilisé comme alliage d'âme est le 3003 de composition (% en poids selon la norme EN 573-3) :
Si < 0,6 Fe < 0,7 Cu; 0,05 - 0,20 Mn: 1,0 - 1,5 Zn < 0,10 autres éléments < 0,05 chacun et < 0,15 au total, balance aluminium. De nombreux alliages ont été proposés au cours des dernières années pour améliorer l'une ou l'autre des propriétés d'emploi mentionnées précédemment, plus particulièrement la résistance à la corrosion, d'où l'appellation d'alliages " long-life " qui leur est parfois donnée dans la profession.

Le brevet EP 0326337 (Alcan International) décrit une bande plaquée dont l'alliage de base a pour composition :
Si < 0,15 Fe < 0,4 Cu : 0,1 - 0,6 Mn: 0,7 - 1,5 Mg < 0,8

La faible teneur en Si, de préférence < 0,05%, permet la formation d'une couche dense de précipités au Mn, appelée souvent « brown band », qui joue le rôle de barrière à la diffusion du silicium de l'alliage de revêtement, et augmente la résistance à la corrosion. WO 94/22633 est une variante du précédent qui ne diffère que par une teneur en Cu plus élevée (0,6 - 0,9%). Dans les deux cas, la « brown band » ne peut être obtenue qu'en l'absence d'homogénéisation avant laminage à chaud ou de recuit intermédiaire.

Le brevet EP 0718072 (Hoogovens Aluminium Walzprodukte) décrit un alliage de base de composition: Si > 0,15 Fe < 0,8 Cu : 0,2 - 2 Mn: 0,7 - 1,5 Mg : 0,1- 0,6 avec Cu + Mg < 0,7 et addition possible de Ti, Cr, Zr ou V. Les exemples montrent des teneurs en Si de 0,5%.

La demande de brevet internationale WO 99/55925 de la même société concerne un alliage de composition :
Mn: 0,7 - 1,5 Cu: 0,5 - 1,5 Mg < 0,8 Si < 0,15 Fe < 0,4

L'alliage présente à l'état brasé et vieilli une limite élastique R0,2 > 75 MPa et une durée de vie sans perforation au test SWAAT d'au moins 13 jours.

La demande de brevet français de la demanderesse n° 99-10536 concerne des bandes ou tubes pour échangeurs brasés en alliage de composition :
Si : 0,15 - 0,30 Fe < 0,25 Cu : 0,2 - 1,1 Mn : 1,0 - 1,4 Mg < 0,4
Zn < 0,2 Fe < Si et Cu + Mg > 0,4

Pour les pièces nécessitant une mise en forme importante, les bandes sont utilisées à l'état recuit (état O selon la norme NF EN 515), et dans les autres cas à l'état écroui, par exemple les états H14 ou H24.

### Problème posé

La résistance à la corrosion des échangeurs brasés, telle qu'elle est mesurée par le test SWAAT, ne dépend pas uniquement de la composition de l'alliage d'âme ou de l'alliage de brasage choisi. Le phénomène qui semble être, pratiquement toujours, à l'origine d'une corrosion rapide des échangeurs, et notamment des plaques d'évaporateurs, est la migration de films liquides (en anglais « Liquid Film Migration » ou LFM). Ce phénomène est décrit, par exemple, dans l'article de H.S. Yang et R.A. Woods « Mechanisms of Liquid Film Migration (LFM) in Aluminum Brazing Sheet », VTMS3 Conference Proceedings, SAE International, Indianapolis, 1997, pp. 639-658. Il s'agit d'un processus de diffusion du silicium de l'alliage de brasage vers l'âme au cours du brasage, l'alliage de brasage étant soit celui qui a été plaqué sur la bande d'alliage d'âme, soit déposé sur celle-ci par tout autre moyen, ou provenant du placage de la pièce adjacente au brasage. Ceci entraîne la formation de joints de grains riches en précipités, qui constituent des chemins privilégiés de corrosion intergranulaire, du fait de la forte différence de potentiel entre les phases présentes et la matrice aluminium. La présence de dislocations favorise ce phénomène. C'est une des raisons, en plus de la meilleure formabilité, pour laquelle on utilise un état recuit qui conduit à une structure recristallisée à grains fins. Cependant, pour les plaques d'échangeurs comportant des parties déformées, la mise en forme génère des écrouissages variables dans la pièce, et, pour obtenir une microstructure recristallisée partout, il faudrait recuire la pièce après mise en forme, ce qui alourdirait les coûts de production. C'est le cas notamment pour les plaques d'évaporateurs.

### Objet de l'invention

Le but de l'invention est d'améliorer encore la résistance à la corrosion, mesurée par le test SWAAT, des éléments emboutis d'échangeurs brasés en alliages d'aluminium du type Al-Mn, et notamment des plaques d'évaporateurs d'échangeurs de climatisation des véhicules, sans augmenter exagérément les coûts de production.

L'invention a ainsi pour objet un procédé de fabrication d'une bande plaquée, d'épaisseur < 1,5 mm, destinée à la fabrication d'éléments emboutis d'échangeurs thermiques brasés, comportant :
- la coulée d'une ébauche en alliage d'âme de composition (% en poids):
   Si < 0,8 Fe < 0,8 Cu : 0,2 - 0,9 Mn : 0,7 - 1,5 Mg < 0,4
   Zn < 0,2 Ti < 0,1 autres éléments < 0,05 chacun et < 0,15 au total, reste aluminium,
- l'homogénéisation de cette ébauche entre 550 et 630°C pendant au moins une heure,
- le placage sur cette ébauche, sur une ou deux faces, d'un alliage d'aluminium de brasage, contenant de préférence de 5 à 13% de silicium,
- le laminage à chaud, puis à froid de l'ébauche plaquée jusqu'à une épaisseur proche de l'épaisseur finale,
- le recuit de recristallisation de la bande entre 300 et 400°C,
- l'écrouissage de la bande recuite pour obtenir une déformation permanente comprise entre 2 et 10% et l'épaisseur finale.

Cet écrouissage final peut être obtenu par un laminage à froid du type « skin pass », ou par planage sous tension

### Description des figures

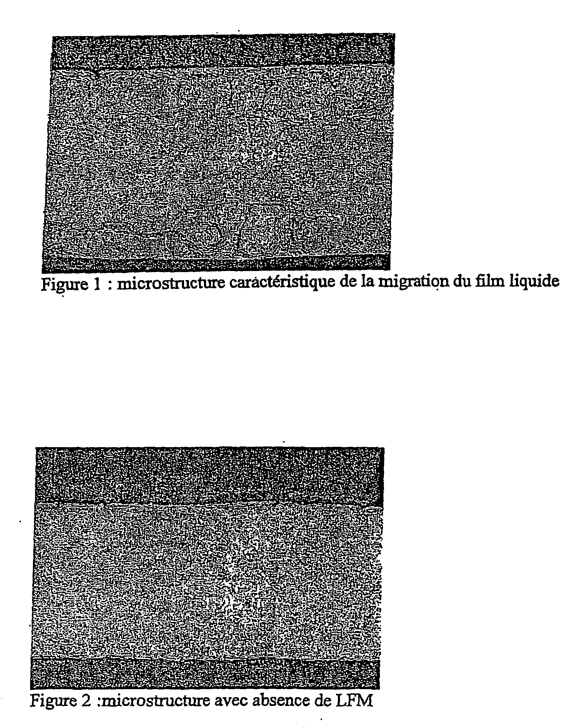

La figure 1 représente une micrographie d'une coupe d'une bande brasée montrant une migration de films liquides.

La figure 2 représente une micrographie d'une coupe d'une bande brasée exempte de ce phénomène.

### Description de l'invention

L'invention repose sur la constatation suivante faite par la demanderesse qu'il est possible d'obtenir une structure recristallisée, non seulement à l'état recuit, mais également, après brasage, au-delà d'un certain niveau d'écrouissage minimum, qui dépend de la mise en forme de la pièce et de l'allure du cycle de brasage, notamment la vitesse de montée en température. Cependant, les états H14 ou H24, utilisés pour les pièces non ou peu déformées, ne conviennent pas pour les pièces fortement déformées comme les plaques d'évaporateurs, car il n'est pas possible de les emboutir, en particulier dans les zones nécessitant un fort allongement. Pour obtenir un niveau d'écrouissage critique acceptable, tout en assurant une bonne recristallisation finale, et donc une absence de dislocations après brasage, la demanderesse a eu l'idée de favoriser la recristallisation par une homogénéisation poussée avant laminage, permettant de créer une population homogène de phases de taille suffisante pour servir de germes aux grains recristallisés. Cette voie va à l'encontre de l'art antérieur en ne cherchant pas à obtenir une « brown band » par absence d'homogénéisation.

Il s'ensuit que le procédé selon l'invention peut s'appliquer à une large gamme d'alliages Al-Mn, sans subir les contraintes de composition liées à l'obtention de la « brown band ». Le manganèse est dans des limites voisines de celles de l'alliage 3003 ; il contribue à la résistance mécanique et à la résistance à la corrosion, en augmentant la différence de potentiel électrochimique entre l'alliage de base et la couche de placage. Comme pour tous les alliages AlMn, il n'est guère possible d'aller au-delà de 1,5%, car l'alliage ne se coule plus facilement.

Il n'est pas nécessaire de maintenir une teneur en silicium en dessous de 0,15%, ce qui permet d'éviter d'utiliser une base pure, dont le coût est élevé. Par ailleurs, dans les alliages contenant du magnésium, le silicium contribue à la résistance mécanique par formation de précipités Mg₂Si. Une teneur en fer limitée est favorable à la résistance à la corrosion et à la formabilité, mais il n'est pas nécessaire de descendre à des teneurs très faibles < 0,15% qui conduiraient à des prix de revient élevés.

Le cuivre est un élément durcissant qui contribue à la résistance mécanique, mais au-delà de 1%, il peut se former des composés intermétalliques grossiers à la coulée qui nuisent à l'homogénéité du métal et constituent des sites d'initiation de la corrosion.

Le magnésium a un effet favorable sur la résistance mécanique. Par contre, il est néfaste à la brasabilité, dans la mesure où il migre à la surface du placage et, lorsqu'il ne s'agit pas d'un brasage sous vide, il vient former une couche d'oxyde qui modifie dans un sens défavorable les propriétés de la brasure et le mécanisme d'action du flux de brasage. Pour cette raison, sa teneur doit être limitée à 0,4%. Pour des applications très exigeantes en ce qui concerne la qualité des joints, il peut être nécessaire de supprimer totalement le magnésium. Dans ce cas, il est préférable d'avoir au moins 0,4% de cuivre pour compenser la perte de résistance mécanique, par exemple en maintenant une somme des teneurs Cu + Mg > 0,4%.

Une addition limitée de zinc peut avoir un effet bénéfique sur la résistance à la corrosion, en modifiant les mécanismes électrochimiques, notamment pour les alliages les plus chargés en cuivre. Elle doit rester cependant en dessous de 0,2% pour éviter une trop forte susceptibilité à la corrosion généralisée. Le titane, à une teneur inférieure à 0,1%, est connu pour avoir une influence favorable sur la résistance à la corrosion.

Dans la mesure où on veut favoriser au maximum la recristallisation de l'alliage, il y a lieu de limiter au maximum la teneur en éléments anti-recristallisants, tels que le chrome, le vanadium, le hafnium ou le scandium, en maintenant par exemple leur teneur maximale en dessous de 0,01%.

L'alliage de brasage doit avoir une température de liquidus suffisamment basse par rapport à l'alliage d'âme pour disposer d'un intervalle de température suffisant pour le brasage, une résistance mécanique acceptable et une bonne mouillabilité. Il s'agit, de préférence, d'un alliage AlSi contenant entre 5 et 13% de silicium, comme par exemple les alliages 4004, 4104, 4045, 4047 ou 4343, et peut contenir d'autres éléments d'addition, par exemple du zinc et/ou du strontium. Il est aussi possible d'utiliser des placages multicouches avec d'autres alliages en plus de la couche d'AlSi. L'épaisseur de la couche plaquée peut varier entre 0,01 et 0,2 mm et représente le plus souvent environ 10% de l'épaisseur totale..

Le procédé de fabrication des bandes comporte la coulée d'une plaque de l'alliage d'âme et d'une ou deux plaques de l'alliage de brasage, selon qu'on vise un plaqué une ou deux faces. La plaque d'alliage d'âme est soumise à une homogénéisation poussée entre 550 et 630°C pendant au moins 1 h, et de préférence plus de 3 h. On fabrique ensuite l'ensemble plaqué, qui est laminé à chaud, de préférence à une température de sortie suffisamment élevée pour limiter au maximum la reprécipitation du manganèse, puis laminé à froid jusqu'à une épaisseur proche de l'épaisseur finale, la différence avec l'épaisseur finale correspondant à la légère réduction d'épaisseur induite par l'opération d'écrouissage ultérieure. On procède ensuite à un recuit à une température comprise entre 300 et 400°C, qui conduit à la recristallisation de l'alliage et une microstructure à grains fins.

La bande est ensuite soumise à un écrouissage avec un taux de déformation permanente compris entre 2 et 10%, et de préférence entre 4 et 8%. Cet écrouissage peut être obtenu par exemple par un laminage à faible réduction au moyen de cylindres de type « skin pass », ou par planage sous tension de la bande

Les bandes selon l'invention sont particulièrement adaptées à la fabrication de plaques d'évaporateurs pour les systèmes de climatisation d'automobiles. Elles ne posent pas de problème à l'emboutissage, et les ensembles brasés fabriqués à partir de ces bandes présentent une durée de vie sans perforation au test SWAAT d'au moins 40 jours, c'est-à-dire supérieure d'au moins 10 jours à celle des meilleurs produits de l'art antérieur. Les études microstructurales effectuées sur des pièces brasées montrent un état totalement recristallisé dans toutes les zones, et une absence de LFM.

### Exemples

### Exemple 1 : gamme de fabrication sans écrouissage final

On a coulé une plaque d'alliage d'âme de composition (% en poids) :
Si = 0,19 Fe = 0,19 Cu = 0,62 Mn = 1,33 Mg = 0,001 Cr = 0,002
Zn = 0,039 Ti = 0,09 reste aluminium.

La plaque a été homogénéisée 10 h à 600°C, puis refroidie. Après scalpage de la plaque, on a soudé sur les deux faces une tôle en alliage 4343 de composition suivante : Si = 7,21 Fe = 0,25 Mn = 0,08 reste aluminium. L'ensemble a été réchauffé à 500°C, puis laminé à chaud à 500°C jusqu'à une épaisseur de 3mm, et enfin laminée à froid jusqu'à 0,52 mm. La bande obtenue a été soumise à un recuit de 30 mn à 350°C.

On a découpé dans la bande recuite des flans pour former par emboutissage des pièces test du type plaque d'évaporateur d'un ensemble de climatisation d'habitacle d'automobile. Les pièces test ont été revêtues d'un flux de brasage non corrosif de type Nocolock ®, puis pré-assemblées entre elles au moyen d'un montage en acier inoxydable. On a effectué le brasage des pièces dans un four sous azote à 600°C pendant 2 mn, puis l'ensemble brasé a été refroidi à l'air.

La microstructure après brasage présente en de nombreux endroits des grains grossiers, délimités par des cordons de gros intermétalliques, mais quasiment dépourvus de précipités en leur sein. Cette microstructure est caractéristique du phénomène de LFM.

Des essais de corrosion au test SWAAT selon la norme ASTM G85 conduisent à une perforation de l'ensemble brasé au bout de 34 jours. En l'absence d'homogénéisation de la plaque de métal d'âme coulée, la perforation est plus rapide et a lieu au bout de 24 jours.

### Exemple 2 : écrouissage final de 3%

On reproduit les mêmes opérations que dans l'exemple 1, sauf que le laminage à froid de la bande plaquée est arrêté à 0,536 mm. Après le recuit, on procède à une traction de la bande à l'aide d'une planeuse sous tension conduisant à un allongement permanent de l'ordre de 3% et réduisant l'épaisseur jusqu'à 0,52 mm.

La microstructure après emboutissage des plaques et brasage, présente une structure recristallisée presque partout, sauf dans les régions les moins déformées qui peuvent, dans certains cas, être encore sujettes à un léger phénomène de LFM.

Des essais de corrosion au test SWAAT conduisent à une corrosion préférentielle des joints brasés avec absence de perforation au bout de 45 jours. Lorsque la plaque de métal d'âme coulée n'a pas subi d'homogénéisation, la perforation a lieu au bout de 28 jours.

### Exemple 3 : écrouissage final de 6%

On reproduit les mêmes opérations que dans l'exemple 1, sauf que le laminage à froid de la bande plaquée est arrêté à 0,552 mm. Après le recuit, on procède à une traction de la bande à l'aide d'une planeuse sous tension conduisant à un allongement permanent de l'ordre de 6% et réduisant l'épaisseur jusqu'à 0,52 mm.

La microstructure après brasage montre une structure recristallisée partout, quelle que soit la déformation, et une absence totale de LFM.

Des essais de corrosion au test S WAAT conduisent à une corrosion préférentielle des joints brasés avec absence de perforation au bout de 45 jours. Le faciès de corrosion sur le métal d'âme est plutôt latéral avec absence de piqûres localisées.

## Revendications

1. Procédé de fabrication d'une bande plaquée, d'épaisseur < 1,5 mm, destinée à la fabrication d'échangeurs thermiques brasés, comportant :
- la coulée d'une ébauche en alliage d'âme de composition (% en poids):
Si < 0,8 Fe < 0,8 Cu : 0,2 - 0,9 Mn : 0,7 - 1,5 Mg < 0,4
Zn < 0,2 Ti < 0,1 autres éléments < 0,05 chacun et < 0,15 au total, reste aluminium,
- l'homogénéisation de cette ébauche entre 550 et 630°C pendant au moins une heure,
- le placage sur cette ébauche, sur une ou deux faces, d'un alliage d'aluminium de brasage,
- le laminage à chaud, puis à froid de l'ébauche plaquée jusqu'à une épaisseur proche de l'épaisseur finale,
- le recuit de recristallisation de la bande entre 300 et 400°C,
- l'écrouissage de la bande recuite pour obtenir une déformation permanente comprise entre 2 et 10% jusqu'à l'épaisseur finale.

2. Procédé selon la revendication 1, **caractérisé en ce que** l'alliage d'âme contient moins de 0,01% de Cr, Zr, Hf, V ou Sc.

3. Procédé selon l'une des revendications 1 ou 2, **caractérisé en ce que** l'alliage de brasage contient de 5 à 13% de silicium.

4. Procédé selon l'une des revendications 1 à 3, **caractérisé en ce que** la durée de l'homogénéisation est supérieure à 3 h.

5. Procédé selon l'une des revendications 1 à 4, **caractérisé en ce que** l'écrouissage de la bande recuite se fait avec une déformation permanente comprise entre 4 et 8%.

6. Procédé selon l'une des revendications 1 à 5, **caractérisé en ce que** l'écrouissage de la bande recuite se fait par un laminage de type skin-pass.

7. Procédé selon l'une des revendications 1 à 5, **caractérisé en ce que** l'écrouissage de la bande recuite se fait par planage sous tension.

8. Bande plaquée fabriquée par un procédé selon l'une des revendications 1 à 7, **caractérisée en ce qu'**après mise en forme et brasage, elle présente une durée de vie sans perforation au test SWAAT selon la norme ASTM G85 de plus de 40 jours.

## Claims

1. Process to manufacture a clad strip, < 1.5 mm thick, intended for the manufacture of brazed heat exchangers, comprising:
- casting of a plate made of core alloy composed as follows (% by weight):
Si < 0.8 Fe < 0.8 Cu: 0.2 - 0.9 Mn: 0.7 - 1.5 Mg < 0.4 Zn < 0.2 Ti < 0.1 other elements < 0.05 each and < 0.15 in total, the remainder aluminum,
- homogenization of said plate between 550 and 630°C for at least one hour,
- cladding on one or two sides of said plate of a brazing aluminum alloy,
- hot rolling followed by cold rolling of the plate to a thickness close to the final thickness,
- recrystallization annealing of the strip between 300 and 400°C,
- strain hardening of the annealed strip to obtain a permanent deformation between 2 and 10% until the final thickness.

2. Process according to claim 1, **characterized in that** the core alloy contains less than 0.01% Cr, Zr, Hf, V or Sc.

3. Process according to any of claims 1 or 2, **characterized in that** the brazing alloy contains 5 to 13% silicon.

4. Process according to any of claims 1 to 3, **characterized in that** the homogenization time is greater than 3 hours.

5. Process according to any of claims 1 to 4, **characterized in that** the strain hardening of the annealed strip is performed with a permanent deformation between 4 and 8%.

6. Process according to any of claims 1 to 5, **characterized in that** the strain hardening of the annealed strip is performed by skin-pass type rolling.

7. Process according to any of claims 1 to 5, **characterized in that** the strain hardening of the annealed strip is performed by tension levelling.

8. Clad strip manufactured using a process according to any of claims 1 to 7, **characterized in that**, after shaping and brazing, it shows a perforation-free service life in a SWAAT test according to ASTM G85 standard of over 40 days.

## Patentansprüche

1. Verfahren zur Herstellung plattierter Bänder von weniger als 1,5 mm Dicke für die Herstellung hartgelöteter Wärmetauscher, umfassend:
- das Gießen eines Rohteils aus einer Kernlegierung der Zusammensetzung (Gew.-%):
Si < 0,8 Fe < 0,8 Cu: 0,2 - 0,9 Mn: 0,7 - 1,5 Mg < 0,4
Zn < 0,2 Ti < 0,1
weitere Elemente jeweils < 0,05 und insgesamt < 0,15, Rest Aluminium,
- das Homogenisieren dieses Rohteils zwischen 550 und 630°C während mindestens einer Stunde,
- das Plattieren dieses Rohteils auf einer oder zwei Seiten mit einer Aluminium-Lötlegierung,
- das Warm- und dann Kaltwalzen des plattierten Rohteils bis auf eine Dicke nahe der Enddicke,
- das Rekristallisationsglühen des Bandes zwischen 300 und 400°C,
- das Kaitverfestigen des geglühten Bandes zur Erzielung einer bleibenden Verformung zwischen 2 und 10 % bis auf die Enddicke.

2. Verfahren nach Anspruch 1, **dadurch gekennzeichnet, dass** die Kemlegierung weniger als 0,01 % Cr, Zr, Hf, V oder Sc enthält.

3. Verfahren nach einem der Ansprüche 1 oder 2, **dadurch gekennzeichnet, dass** die Lötlegierung 5 bis 13 % Silizium enthält.

4. Verfahren nach einem der Ansprüche 1 bis 3, **dadurch gekennzeichnet, dass** die Dauer der Homogenisierung mehr als 3 h beträgt.

5. Verfahren nach einem der Ansprüche 1 bis 4, **dadurch gekennzeichnet, dass** die Kaltverfestigung des geglühten Bandes mit einer bleibenden Verformung zwischen 4 und 8 % erfolgt

6. Verfahren nach einem der Ansprüche 1 bis 5, **dadurch gekennzeichnet, dass** die Kaltverfestigung des geglühten Bandes durch Skinpass-Walzen erfolgt.

7. Verfahren nach einem der Ansprüche 1 bis 5, **dadurch gekennzeichnet, dass** die Kaltverfestigung des geglühten Bandes durch Bandrecken erfolgt.

8. Plattiertes Band, hergestellt durch ein Verfahren nach einem der Ansprüche 1 bis 7, **dadurch gekennzeichnet, dass** es nach Formen und Löten eine Lebensdauer ohne Lochbildung beim SWAAT-Test nach der Norm ASTM G85 von mehr als 40 Tagen aufweist.
